(19) Europäisches Patentamt
European Patent Office
Office européen des brevets

(11) **EP 4 060 390 A1**

(12) **EUROPEAN PATENT APPLICATION**
published in accordance with Art. 153(4) EPC

(43) Date of publication:
**21.09.2022 Bulletin 2022/38**

(21) Application number: **20904828.9**

(22) Date of filing: **28.12.2020**

(51) International Patent Classification (IPC):
**G02B 6/293** (2006.01)

(52) Cooperative Patent Classification (CPC):
**G02B 6/02; G02B 6/293; G02B 6/42; G02B 6/44**

(86) International application number:
**PCT/CN2020/140109**

(87) International publication number:
**WO 2021/129870 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.12.2019 CN 201911385172
25.05.2020 CN 202010450190**

(71) Applicant: **Huawei Technologies Co., Ltd.
Shenzhen, Guangdong 518129 (CN)**

(72) Inventors:
• **LI, Kun
Shenzhen, Guangdong 518129 (CN)**
• **ZHANG, Luqi
Shenzhen, Guangdong 518129 (CN)**
• **LYU, Rui
Shenzhen, Guangdong 518129 (CN)**
• **LIU, Yu
Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **TRANSMISSION CABLE**

(57)     A transmission cable (504) is provided, to implement high-speed inter-device interconnection and intercommunication. In particular, the transmission cable (504) is widely used in the fields that need massive data transmission, such as a data center. The transmission cable (504) includes a positive dispersion transmission section (1301), a negative dispersion transmission section (1302), and a dispersion matching section (1303). A cross-sectional diameter of the positive dispersion transmission section (1301) is less than a cross-sectional diameter of the negative dispersion transmission section (1302). In the transmission cable (504), the dispersion matching section (1303) is configured to connect the positive dispersion transmission section (1301) and the negative dispersion transmission section (1302). The transmission cable (504) can implement dispersion cancellation and an effect of reducing a total group delay quantity.

FIG. 13

**Description**

This application claims priority to Chinese Patent Application No. 201911385172.4, filed with the China National Intellectual Property Administration on December 28, 2019, and entitled "TRANSMISSION CABLE", and claims priority to Chinese Patent Application No. 202010450190.2, filed with the China National Intellectual Property Administration on May 25, 2020, and entitled "TRANSMISSION CABLE", which are incorporated herein by reference in their entireties.

**TECHNICAL FIELD**

This application relates to the field of communication interconnection, and in particular, to a transmission cable technology that is applicable to terahertz and millimeter wave bands.

**BACKGROUND**

As traffic of a network data center increases at a high speed, a requirement for an inter-device transmission rate becomes increasingly high. An application scenario of a top of rack (Top of Rack, TOR) architecture of a data center is used as an example. A large quantity of high-speed cables need to be interconnected between racks and inside each rack of the data center. Currently, an active optical cable (Active Optical Cable, AOC) and a direct attach cable (Direct Attach Cable, DAC) are two main interconnection manners. However, in an application process of the AOC, an electrical signal needs to be converted into an optical signal, or an optical signal needs to be converted into an electrical signal, optical transceivers at both ends of the optical cable need to provide a photoelectric conversion function and an optical transmission function, and therefore, high power consumption and costs are generated. The DAC does not need to perform electro-optic and photoelectric conversion, so that power consumption and costs are low; however, a metal loss increased as an operating frequency increases greatly limits a transmission distance and a transmission rate of the direct attach cable, and the direct attach cable has a large weight and a large bending radius, which is not conducive to application of the direct attach cable in a dense cabling scenario.

In a terahertz active cable (Terahertz active cable, TAC) technology based on a complementary metal oxide semiconductor (Complementary Metal Oxide Semiconductor, CMOS) chip with low power consumption and low costs and based on a low-loss polymer transmission cable, a terahertz wave is used as a carrier, and the polymer transmission cable is used as a transmission medium. The technology is a new interconnection manner that can be applied to a data center and that is different from the AOC and the DAC. However, a dispersion characteristic of an existing TAC has a feature of changing as a diameter length changes, and is poor in an operating band range. Therefore, a total group delay quantity of in-band transmission is large. Therefore, exploring a TAC with low dispersion and a low group delay has a great application prospect in a data center scenario that meets growth of massive data.

**SUMMARY**

This application provides a transmission cable, to resolve a problem of a large total group delay quantity that exists in an existing cable applied to terahertz and millimeter wave bands.

According to a first aspect, a transmission cable is provided. The transmission cable includes at least one periodic structure. The periodic structure includes a positive dispersion transmission section, a negative dispersion transmission section, a positive-to-negative dispersion matching section, and a negative-to-positive dispersion matching section. A dispersion coefficient of the positive dispersion transmission section is positive, a dispersion coefficient of the negative dispersion transmission section is negative, and a cross-sectional diameter of the positive dispersion transmission section is less than a cross-sectional diameter of the negative dispersion transmission section. The positive-to-negative dispersion matching section is configured to connect the positive dispersion transmission section and the negative dispersion transmission section, and the other end of the negative dispersion transmission section is connected to the negative-to-positive dispersion matching section or the other end of the positive dispersion transmission section is connected to the negative-to-positive dispersion matching section.

In this embodiment of this application, mutual dispersion cancellation can be performed by using the positive dispersion transmission section and the negative dispersion transmission section that are periodically spaced, thereby reducing a total group delay quantity, and meeting a requirement of massive data transmission in a data center scenario.

In a possible implementation, the cross-sectional diameter $D_p$ of the positive dispersion transmission section and the cross-sectional diameter $D_n$ of the negative dispersion transmission section meet the following relationship:

$$D_n > \frac{1.175c}{f_c \sqrt{\varepsilon_1}} > D_p.$$

$\varepsilon_1$ is a relative dielectric constant of the periodic structure, c is a speed of light in a vacuum, and $f_c$ is a lowest operating frequency in an operating band. In this case, a signal whose frequency is not less than $f_c$ can be transmitted in the transmission cable disclosed in this application, and interaction between positive dispersion and negative dispersion of the signal in the transmission cable can be implemented, so that dispersion and a total group delay quantity of the signal in the transmission cable are reduced.

In a possible implementation, the dispersion coefficient $C_p$ of the positive dispersion transmission section and the dispersion coefficient $C_n$ of the negative dispersion transmission section have a same value and opposite symbols. In this case, a positive dispersion transmission section and a negative dispersion transmission section that have a same length may be selected, so that a total group delay quantity of the two transmission sections is close to 0. In addition, compared with a case in which a positive dispersion transmission section and a negative dispersion transmission section that have different lengths and different dispersion coefficients are selected, the signal has a larger operating bandwidth in the transmission cable, and has better processing consistency.

In a possible implementation, a length of each section in the four-section structure included in the periodic structure is not less than $c/f_c\sqrt{\varepsilon_1}$, where $\varepsilon_1$ is the relative dielectric constant of the periodic structure, c is the speed of light in a vacuum, and $f_c$ is the lowest operating frequency in an operating band. The length of each of the four sections in the periodic structure meets the foregoing requirement, so that a low reflectivity can be implemented, and a transmission loss of the signal in the transmission cable is reduced.

Further, the length of each section in the four-section structure may be an integer multiple of $c/f_c\sqrt{\varepsilon_1}$, or certainly, a length of any one or more sections may be an integer multiple of $c/f_c\sqrt{\varepsilon_1}$. Further, both the length of the positive dispersion transmission section and the length of the negative dispersion transmission section may be $n \times c/f_c\sqrt{\varepsilon_1}$, and n is a positive integer. That is, the two transmission sections have a same multiple. In addition, both the length of the positive-to-negative dispersion matching section and the length of the negative-to-positive dispersion matching section may be $m \times c/f_c\sqrt{\varepsilon_1}$, and m is a positive integer. That is, the two matching sections have a same multiple. Usually, if a length is an integer multiple of $c/f_c\sqrt{\varepsilon_1}$, a reflection parameter of a cable is smaller, and a design is simpler.

In a possible implementation, the transmission cable further includes a shielding cladding, and the shielding cladding wraps the periodic structure to shield external electromagnetic interference. The shielding cladding may be a dielectric foam shielding cladding or a metal shielding cladding. A material of the dielectric foam shielding cladding needs to be a dielectric material with a relative dielectric constant lower than that of a dielectric core and a low loss tangent, for example, PTFE foam. The metal shielding cladding may use a metal material with an excellent electromagnetic shielding effect and a high conductivity, for example, copper foil, aluminum foil, or tin foil.

With reference to the previous implementation, in a possible implementation, the shielding cladding is a dielectric foam shielding cladding, where a relative dielectric constant of the dielectric foam shielding cladding is less than the relative dielectric constant $\varepsilon_1$ of the periodic structure, so that an electric field of the signal can be more concentrated in the core, and a radiation loss is reduced. Alternatively, the shielding cladding is a metal shielding cladding, where a conductivity of the metal shielding cladding is not less than $1 \times 10^7$ seconds/meter (s/m). Because a higher conductivity of a metal indicates a smaller signal loss, a loss of the signal in the transmission cable can be reduced if a condition of this embodiment is met.

In a possible implementation, the dispersion coefficient $C_p$ and a length $L_p$ of the positive dispersion transmission section, the dispersion coefficient $C_n$ and a length $L_n$ of the negative dispersion transmission section, a dispersion coefficient $C_1$ and a length $L_1$ of the positive-to-negative dispersion matching section, and a dispersion coefficient $C_2$ and a length $L_2$ of the negative-to-positive dispersion matching section meet the following relationship:

$$C_n \times L_n + C_p \times L_p + C_1 \times L_1 + C_2 \times L_2 = 0$$

In this embodiment, a total group delay quantity of each periodic structure is 0, and 0 is an optimal case. It can be ensured that cancellation between positive dispersion and negative dispersion can be implemented in the periodic structure. In an actual case, there may be some deviations. A deviation that may occur due to a factor, for example, a process or an external environment, or cable aging, should also fall within the protection scope of this application.

In a possible implementation, the dispersion coefficient $C_p$ and the length $L_p$ of the positive dispersion transmission section, the dispersion coefficient $C_n$ and the length $L_n$ of the negative dispersion transmission section, the dispersion coefficient $C_1$ and the length $L_1$ of the positive-to-negative dispersion matching section, and the dispersion coefficient $C_2$ and the length $L_2$ of the negative-to-positive dispersion matching section meet the following relationships: $L_p=L_n$ and $C_p+C_n=0$; and $L_1=L_2$ and $C_1+C_2=0$.

In this embodiment, the length of the positive dispersion transmission section and the length of the negative dispersion transmission section are the same; and the dispersion coefficient of the positive dispersion transmission section and the dispersion coefficient of the negative dispersion transmission section have a same value and opposite symbols. In addition, the length of the positive-to-negative dispersion matching section and the length of the negative-to-positive dispersion matching section are the same; and the dispersion coefficient of the positive-to-negative dispersion matching section and the dispersion coefficient of the negative-to-positive dispersion matching section have a same value and opposite symbols. In this case, the signal has a large operating bandwidth in the transmission cable, and has good processing consistency.

In a possible implementation, a diameter of a joint face between the positive-to-negative dispersion matching section and the positive dispersion transmission section is the same as the cross-sectional diameter of the positive dispersion transmission section, a diameter of a joint face between the positive-to-negative dispersion matching section and the negative dispersion transmission section is the same as the cross-sectional diameter of the negative dispersion transmission section, and a cross-sectional diameter of the positive-to-negative dispersion matching section has a gradient transition or a step transition.

In a possible implementation, a diameter of a joint face between the negative-to-positive dispersion matching section and the negative dispersion transmission section is the same as the cross-sectional diameter of the negative dispersion transmission section, a diameter of a joint face between the negative-to-positive dispersion matching section and a positive dispersion transmission section in a next periodic structure is the same as a cross-sectional diameter of the positive dispersion transmission section, and a cross-sectional diameter of the negative-to-positive dispersion matching section has a gradient transition or a step transition.

In the foregoing two embodiments, if a gradient transition-type matching structure is used, good impedance matching can be implemented with less reflection, and the transmission loss of the signal can be reduced; or if a step transition-type matching structure is used, there is an advantage of simple process. In addition, the matching structure may alternatively use a form of a parabolic gradient transition, a hyperbolic gradient transition, a Chebyshev curve gradient transition, or the like.

In a possible implementation, a material of the periodic structure includes any one of polytetrafluoroethylene, polypropylene, polyethylene, high-density polyethylene (HDPE), and polystyrene. The periodic structure is a transmission cable that includes two transmission sections and two matching sections. Any one of the foregoing materials may be used. The material has a low loss in millimeter and terahertz wave bands, thereby facilitating transmission of a signal whose frequency is in millimeter and terahertz wave bands.

According to a second aspect, a transmission cable is provided. The transmission cable includes a positive dispersion transmission section, a negative dispersion transmission section, and a dispersion matching section. A dispersion coefficient of the positive dispersion transmission section is positive, a dispersion coefficient of the negative dispersion transmission section is negative, a cross-sectional diameter of the positive dispersion transmission section is less than a cross-sectional diameter of the negative dispersion transmission section, and the dispersion matching section is configured to connect the positive dispersion transmission section and the negative dispersion transmission section.

The transmission cable provided in this embodiment of this application includes the positive dispersion transmission section and the negative dispersion transmission section, to perform mutual dispersion cancellation, thereby reducing a total group delay quantity, and meeting a requirement of massive data transmission in a data center scenario.

In a possible implementation, the cross-sectional diameter $D_p$ of the positive dispersion transmission section and the cross-sectional diameter $D_n$ of the negative dispersion transmission section meet the following relationship:

$$D_n > \frac{1.175c}{f_c \sqrt{\varepsilon_1}} > D_p.$$

$\varepsilon_1$ is a relative dielectric constant of a periodic structure, c is a speed of light in a vacuum, and $f_c$ is a lowest operating frequency in an operating band. In this case, a signal whose frequency is not less than $f_c$ can be transmitted in the transmission cable disclosed in this application, and interaction between positive dispersion and negative dispersion of the signal in the transmission cable can be implemented, so that dispersion and a total group delay quantity of the signal in the transmission cable are reduced.

In a possible implementation, the dispersion coefficient $C_p$ of the positive dispersion transmission section and the dispersion coefficient $C_n$ of the negative dispersion transmission section have a same value and opposite symbols. In this case, a positive dispersion transmission section and a negative dispersion transmission section that have a same length may be selected, so that a total group delay quantity of the two transmission sections is close to 0. In addition, compared with a case in which a positive dispersion transmission section and a negative dispersion transmission section that have different lengths and different dispersion coefficients are selected, the signal has a larger operating bandwidth in the transmission cable, and has better processing consistency.

In a possible implementation, the dispersion matching section includes a positive-to-negative dispersion matching section and a negative-to-positive dispersion matching section. The positive-to-negative dispersion matching section is configured to connect the positive dispersion transmission section and the negative dispersion transmission section, and the other end of the negative dispersion transmission section is connected to the negative-to-positive dispersion matching section or the other end of the positive dispersion transmission section is connected to the negative-to-positive dispersion matching section.

In a possible implementation, the transmission cable includes a plurality of periodic structures, and each periodic structure includes a positive dispersion transmission section, a negative dispersion transmission section, a positive-to-negative dispersion matching section, and a negative-to-positive dispersion matching section. A transmission cable that meets long-distance transmission and has a dispersion cancellation effect is formed based on the structures that periodically spaced.

In a possible implementation, all of a length of the positive dispersion transmission section, a length of the negative dispersion transmission section, and a length of the dispersion matching section are not less than $\dfrac{c}{f_c\sqrt{\varepsilon_1}}$ , where $\varepsilon_1$ is a relative dielectric constant of the transmission cable, c is the speed of light in a vacuum, and $f_c$ is the lowest operating frequency in an operating band. The transmission sections or the matching section meets the foregoing requirement, so that a low reflectivity can be implemented, and a transmission loss of the signal in the transmission cable is reduced.

In a possible implementation, the length of each of the positive dispersion transmission section, the negative dispersion transmission section, and the dispersion matching section is an integer multiple of $\dfrac{c}{f_c\sqrt{\varepsilon_1}}$ . Further, both the length of the positive dispersion transmission section and the length of the negative dispersion transmission section may be $n\times c/f_c\sqrt{\varepsilon_1}$ , and n is a positive integer. That is, the two transmission sections have a same multiple. In addition, both a length of the positive-to-negative dispersion matching section and a length of the negative-to-positive dispersion matching section may be $m\times c/f_c\sqrt{\varepsilon_1}$ , and m is a positive integer. That is, the two matching sections have a same multiple. Usually, if a length is an integer multiple of $c/f_c\sqrt{\varepsilon_1}$ , a reflection parameter of a cable is smaller, and a design is simpler.

In a possible implementation, the transmission cable further includes a shielding cladding, and the shielding cladding wraps the positive dispersion transmission section, the negative dispersion transmission section, and the dispersion matching section to shield external electromagnetic interference. The shielding cladding may be a dielectric foam shielding cladding or a metal shielding cladding. A material of the dielectric foam shielding cladding needs to be a dielectric material with a relative dielectric constant lower than that of a dielectric core and a low loss tangent, for example, PTFE foam. The metal shielding cladding may use a metal material with an excellent electromagnetic shielding effect and a high conductivity, for example, copper foil, aluminum foil, or tin foil.

In a possible implementation, the shielding cladding is a dielectric foam shielding cladding, where a relative dielectric constant of the dielectric foam shielding cladding is less than the relative dielectric constant $\varepsilon_1$ of the transmission cable, so that an electric field of the signal can be more concentrated in the core, and a radiation loss is reduced. Alternatively, the shielding cladding is a metal shielding cladding, where a conductivity of the metal shielding cladding is not less than $1\times10^7$ seconds/meter (s/m). Because a higher conductivity of a metal indicates a smaller signal loss, a loss of the signal in the transmission cable can be reduced if a condition of this embodiment is met.

In a possible implementation, the dispersion coefficient $C_p$ and a length $L_p$ of the positive dispersion transmission section, the dispersion coefficient $C_n$ and a length $L_n$ of the negative dispersion transmission section, a dispersion coefficient $C_1$ and a length $L_1$ of the positive-to-negative dispersion matching section, and a dispersion coefficient $C_2$ and a length $L_2$ of the negative-to-positive dispersion matching section meet the following relationship:

$$\left| \frac{C_n \times L_n + C_p \times L_p + C_1 \times L_1 + C_2 \times L_2}{L_n + L_p + L_1 + L_2} \right| < min(|C_n|, |C_P|).$$

In this embodiment, a total dispersion amount of the four sections is less than that of a positive dispersion transmission section of a same length or a negative dispersion transmission section of a same length, so that a cancellation effect between positive dispersion and negative dispersion can be implemented. In an actual case, there may be some deviations. A deviation that may occur due to a factor, for example, a process or an external environment, or cable aging, should also fall within the protection scope of this application.

In a possible implementation, the dispersion coefficient $C_p$ and the length $L_p$ of the positive dispersion transmission section and the dispersion coefficient $C_n$ and the length $L_n$ of the negative dispersion transmission section meet the following relationships:

$L_p = L_n$ and $C_p + C_n = 0$.

In this embodiment, the length of the positive dispersion transmission section and the length of the negative dispersion transmission section are the same; and the dispersion coefficient of the positive dispersion transmission section and the dispersion coefficient of the negative dispersion transmission section have a same value and opposite symbols. In this case, the signal has a large operating bandwidth in the transmission cable, and has good processing consistency. It should be understood that there is an error between sizes of the dispersion coefficients, and the error also falls within the protection scope of this application.

In a possible implementation, a diameter of a joint face between the dispersion matching section and the positive dispersion transmission section is the same as the cross-sectional diameter of the positive dispersion transmission section, a diameter of a joint face between the dispersion matching section and the negative dispersion transmission section is the same as the cross-sectional diameter of the negative dispersion transmission section, and a cross-sectional diameter of the dispersion matching section has a gradient transition or a step transition. In this embodiment, if a gradient transition-type matching structure is used, good impedance matching can be implemented with less reflection, and the transmission loss of the signal can be reduced; or if a step transition-type matching structure is used, there is an advantage of simple process. In addition, the matching structure may alternatively use a form of a parabolic gradient transition, a hyperbolic gradient transition, a Chebyshev curve gradient transition, or the like.

In a possible implementation, a material of the positive dispersion transmission section, a material of the negative dispersion transmission section, and a material of the dispersion matching section each include any one of polytetrafluoroethylene, polypropylene, polyethylene, high-density polyethylene (HDPE), and polystyrene. The material has a low loss in millimeter and terahertz wave bands, thereby facilitating transmission of a signal whose frequency is in millimeter and terahertz wave bands.

According to a third aspect, a transmission cable system is provided. The transmission cable system includes a radio frequency chip, a baseband signal processing chip, an electromagnetic coupling structure, and the transmission cable in any possible implementation of the first aspect or the second aspect. The baseband signal processing chip is electrically connected to the radio frequency chip, the radio frequency chip is further connected to the electromagnetic coupling structure, and the electromagnetic coupling structure is connected to the transmission cable.

The transmission cable system provided in this embodiment may be used in a scenario that needs massive data transmission, for example, a data center, to implement interconnection and intercommunication.

In a possible implementation, the radio frequency chip includes a radio frequency transmit end chip and a radio frequency receive end chip, the electromagnetic coupling structure includes a first electromagnetic coupling structure and a second electromagnetic coupling structure, and the transmission cable includes a first transmission cable and a second transmission cable. The baseband processing chip is configured to receive a service signal, and send a signal to the radio frequency transmit end chip after processing. The radio frequency transmit end chip performs up-conversion processing on the received signal, and couples a processed signal to the first transmission cable through the first electromagnetic coupling structure, and transmits the signal through the first transmission cable. The second transmission cable is configured to receive a signal, and couple the received signal to the radio frequency receive end chip through the second electromagnetic coupling structure. The radio frequency receive end chip performs down-conversion processing on the received signal, and sends a processed signal to the baseband signal processing chip. The baseband signal processing chip is configured to demodulate the received signal.

In a possible implementation, the transmission cable system further includes a packaging structure, configured to package the radio frequency chip, the baseband signal processing chip, and the electromagnetic coupling structure. The packaging structure can implement dust protection, and can be adapted to a standard interface in a network, to implement inter-device interconnection and intercommunication without changing a device interface.

The transmission cable provided in this embodiment of this application includes transmission sections that respectively have a positive dispersion characteristic and a negative dispersion characteristic and have different cross-sectional sizes, and two transmission sections corresponding to two cross-sectional sizes are separately connected through a matching section, thereby implementing partial or complete cancellation between positive dispersion and negative dispersion in an operating band. Under a premise of ensuring an excellent transmission characteristic, a total group delay quantity is greatly reduced, and an impact of dispersion on a signal is greatly reduced.

**BRIEF DESCRIPTION OF DRAWINGS**

FIG. 1 is a schematic diagram of an internal interconnection of a data center;
FIG. 2 shows a transmission cable according to an embodiment of this application;
FIG. 3 is a schematic diagram of a matching structure in a transmission cable according to another embodiment of this application;
FIG. 4 is a schematic diagram of a matching structure in a transmission cable according to another embodiment of this application;
FIG. 5 shows a transmission cable system according to another embodiment of this application;
FIG. 6 is a diagram of a simulation result of a group delay characteristic of a transmission cable according to another embodiment of this application;
FIG. 7 is a diagram of a simulation result of an S parameter of a transmission cable according to another embodiment of this application;
FIG. 8 is a diagram of a simulation result of a loss characteristic of a transmission cable according to another embodiment of this application;
FIG. 9 is a schematic diagram of a matching structure in a transmission cable according to another embodiment of this application;
FIG. 10 is a diagram of a simulation result of a group delay characteristic of a transmission cable according to another embodiment of this application;
FIG. 11 is a diagram of a simulation result of an S parameter of a transmission cable according to another embodiment of this application;
FIG. 12 is a diagram of a simulation result of a loss characteristic of a transmission cable according to another embodiment of this application;
FIG. 13 shows a transmission cable according to another embodiment of this application;
FIG. 14 is a diagram of a simulation result of an S parameter of a transmission cable according to another embodiment of this application;
FIG. 15 is a diagram of a simulation result of a loss characteristic of a transmission cable according to another embodiment of this application;
FIG. 16 shows a transmission cable according to another embodiment of this application;
FIG. 17 shows a transmission cable according to another embodiment of this application; and
FIG. 18 shows a transmission cable according to another embodiment of this application.

**DESCRIPTION OF EMBODIMENTS**

Before embodiments of this application are described in detail, application scenarios of embodiments of this application are described first.

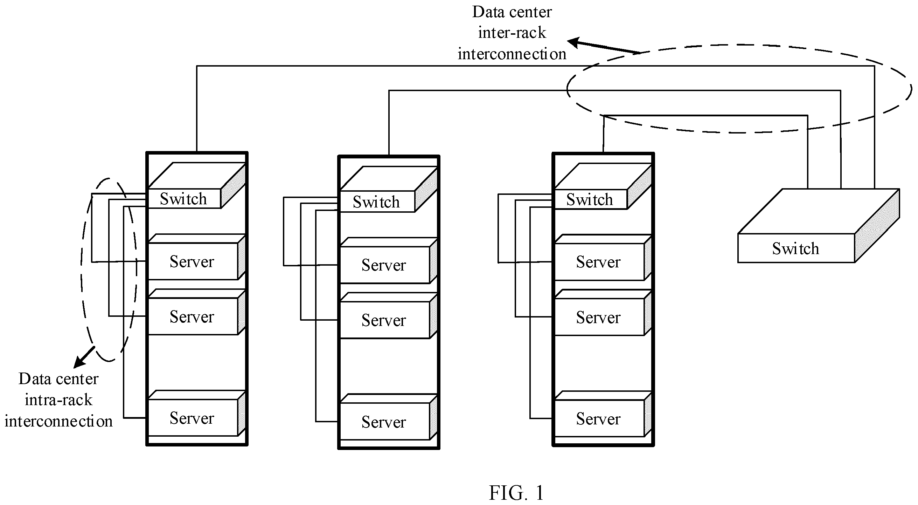

As traffic of a network data center increases at a high speed, a requirement for an inter-device transmission rate becomes increasingly high. In particular, in a data center network, a large quantity of high-speed cables need to be interconnected between racks of the data center and between servers inside each rack, as shown in FIG. 1. This application provides a transmission cable technology. A transmission cable in the transmission cable technology has features of low dispersion and a low group delay, thereby implementing signal transmission in terahertz and millimeter wave bands, and meeting an increasing data interconnection requirement in a data center scenario.

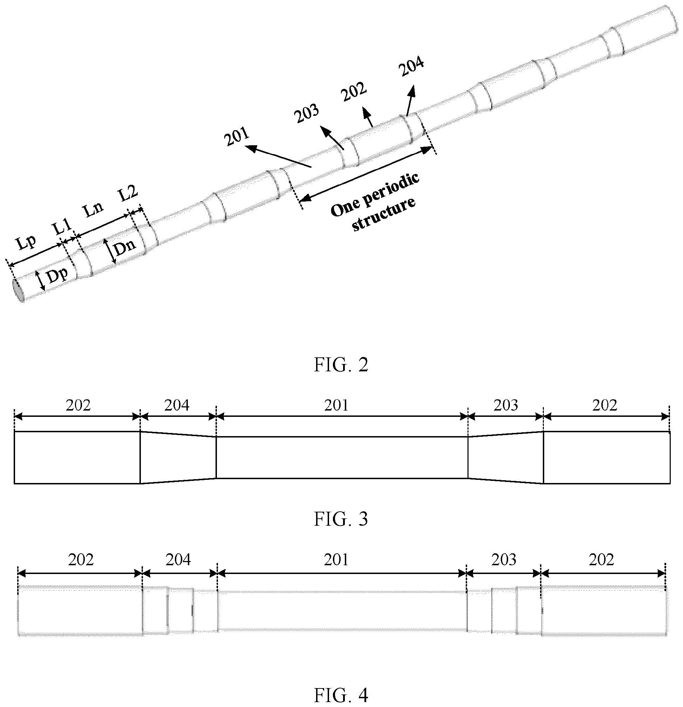

This application provides a transmission cable. As shown in FIG. 2, the transmission cable includes at least one periodic structure 200. The periodic structure 200 includes a positive dispersion transmission section 201, a negative dispersion transmission section 202, a positive-to-negative dispersion matching section 203, and a negative-to-positive dispersion matching section 204, where a dispersion coefficient of the positive dispersion transmission section 201 is positive, a dispersion coefficient of the negative dispersion transmission section 202 is negative, and a cross-sectional diameter of the positive dispersion transmission section 201 is less than a cross-sectional diameter of the negative dispersion transmission section 202. In other words, the positive dispersion transmission section 201 is thinner than the negative dispersion transmission section 202.

A specific connection manner is shown in FIG. 2. One end of the positive dispersion transmission section 201 is connected to one end of the positive-to-negative dispersion matching section 203, the other end of the positive-to-negative dispersion matching section 203 is connected to one end of the negative dispersion transmission section 202, and the other end of the negative dispersion transmission section 202 is connected to a positive dispersion transmission section of a next periodic structure. Each of the positive dispersion transmission section 201, the negative dispersion transmission section 202, the positive-to-negative dispersion matching section 203, and the negative-to-positive dispersion matching section 204 is one section of the transmission cable, and the periodic structure 200 is a transmission cable including the four sections. The periodic structure 200 is configured to perform dispersion cancellation, to reduce a total group delay quantity.

It should be understood that a sorting manner of the four sections remains unchanged, and only a start section may be different. That is, the periodic structure may alternatively have another division manner. For example, the negative dispersion transmission section is used as a start, and the periodic structure includes the negative dispersion transmission section, the negative-to-positive dispersion matching section, the positive dispersion transmission section, and the positive-to-negative dispersion matching section that are successively connected. Alternatively, the negative-to-positive dispersion matching section is used as a start, and the periodic structure includes the negative-to-positive dispersion matching section, the positive dispersion transmission section, the positive-to-negative dispersion matching section, and the negative dispersion transmission section that are successively connected. Alternatively, the positive-to-negative dispersion matching section is used as a start, and the periodic structure includes the positive-to-negative dispersion matching section, the negative dispersion transmission section, the negative-to-positive dispersion matching section, and the positive dispersion transmission section that are successively connected. Any one of the foregoing division manners falls within the protection scope of this application.

In addition, the transmission cable falls within the protection scope of this application, provided that the transmission cable includes at least one periodic structure 200 disclosed in this application, and it is not required that the transmission cable includes only the periodic structure 200. For example, a positive dispersion transmission section is used as a start, and the transmission cable includes 100 periodic structures 200 shown in FIG. 2 and one positive dispersion transmission section as an end. Alternatively, a negative dispersion transmission section is used as a start, and the transmission cable includes the negative dispersion transmission section, a negative-to-positive dispersion matching section, and 100 periodic structures 200 shown in FIG. 2. Alternatively, a negative dispersion transmission section is used as a start, and the transmission cable includes the negative dispersion transmission section, a negative-to-positive dispersion matching section, 100 periodic structures 200 shown in FIG. 2, and one positive dispersion transmission section as an end. The foregoing several possible arrangement manners all fall within the protection scope of this application.

In this embodiment of this application, transmission cables that respectively have a positive dispersion characteristic and a negative dispersion characteristic and have different cross-sectional sizes are periodically spaced, and the two transmission sections corresponding to the two cross-sectional sizes are separately connected through a matching section, thereby implementing a beneficial effect of partial or complete cancellation between positive dispersion and negative dispersion in an operating band. Under a premise of ensuring an excellent transmission characteristic, the total group delay quantity is greatly reduced, and an impact of dispersion on a signal is greatly reduced.

In this embodiment of this application, a length of each section in the four-section structure included in the periodic structure 200 is not less than $c/f_c\sqrt{\varepsilon_1}$ , that is, not less than a waveguide wavelength, where $\varepsilon_1$ is a relative dielectric constant of a material used in the periodic structure 200, c is a speed of light in a vacuum, and $f_c$ is a lowest operating frequency in an operating band, that is, $f_c$ is a minimum operating frequency at which a fundamental mode of a signal can be transmitted in the transmission cable, and a signal whose frequency is lower *than fc* cannot be transmitted. The length of each of the four sections in the periodic structure meets the foregoing requirement, so that a low reflectivity can be implemented, and a transmission loss of the signal in the transmission cable is reduced.

Further, the length of each section in the four-section structure may be an integer multiple of the waveguide wavelength, or certainly, a length of any one or more sections may be an integer multiple of the waveguide wavelength. Further, both the length of the positive dispersion transmission section and the length of the negative dispersion transmission section may be n times the waveguide wavelength, and n is a positive integer. That is, the two transmission sections have a same multiple. In addition, both the length of the positive-to-negative dispersion matching section and the length of the negative-to-positive dispersion matching section may be m times the waveguide wavelength, and m is a positive integer. That is, the two matching sections have a same multiple. Usually, if a length is an integer multiple of the waveguide wavelength, a reflection parameter of a cable is smaller, and a design is simpler.

In this embodiment of this application, the cross-sectional diameter $D_p$ of the positive dispersion transmission section 201 and the cross-sectional diameter $D_n$ of the negative dispersion transmission section 202 meet the following relationship:

$$D_n > \frac{1.175c}{f_c \sqrt{\varepsilon_1}} > D_p.$$

In this case, a signal whose frequency is not less than $f_c$ can be transmitted in the transmission cable disclosed in this application, and interaction between positive dispersion and negative dispersion of the signal in the transmission cable can be implemented, so that dispersion and a total group delay quantity of the signal in the transmission cable are reduced.

Because a total group delay quantity is equal to a product of a dispersion coefficient and a length, a total group delay quantity of the positive dispersion transmission section is equal to a product of the dispersion coefficient $C_p$ and the length $L_p$ of the positive dispersion transmission section, a total group delay quantity of the negative dispersion transmission section is equal to a product of the dispersion coefficient $C_n$ and the length $L_n$ of the negative dispersion transmission section, a total group delay quantity of the positive-to-negative dispersion matching section is equal to a product of a dispersion coefficient $C_1$ and the length $L_1$ of the positive-to-negative dispersion matching section, and a total group delay quantity of the negative-to-positive dispersion matching section is equal to a product of a dispersion coefficient $C_2$ and the length $L_2$ of the negative-to-positive dispersion matching section. A total group delay quantity of the four sections may meet the following relationship:

$$C_n \times L_n + C_p \times L_p + C_1 \times L_1 + C_2 \times L_2 = 0.$$

It should be understood that a total group delay quantity of each periodic structure is 0, and 0 is an optimal case. It can be ensured that cancellation between positive dispersion and negative dispersion can be implemented in the periodic structure. In an actual case, there may be some deviations. A deviation that may occur due to a factor, for example, a process or an external environment, or cable aging, should also fall within the protection scope of this application.

Optionally, a sum of the total group delay quantity of the positive dispersion transmission section and the total group delay quantity of the negative dispersion transmission section is 0, and a sum of the total group delay quantity of the positive-to-negative dispersion matching section and the total group delay quantity of the negative-to-positive dispersion matching section is 0. It should be understood that, that the total group delay quantity is 0 should also include a deviation that may occur due to a factor, for example, a process or an external environment, or cable aging. Further, the length $L_p$ of the positive dispersion transmission section may be equal to the length $L_n$ of the negative dispersion transmission section, and the length $L_1$ of the positive-to-negative dispersion matching section may be equal to the length $L_2$ of the negative-to-positive dispersion matching section. The dispersion coefficient $C_p$ of the positive dispersion transmission section and the dispersion coefficient $C_n$ of the negative dispersion transmission section have a same value and opposite symbols; and the dispersion coefficient $C_1$ of the positive-to-negative dispersion matching section and the dispersion coefficient $C_2$ of the negative-to-positive dispersion matching section have a same value and opposite symbols. In this case, compared with a case in which sections that have different lengths and different dispersion coefficients are used, the signal has a larger operating bandwidth in the transmission cable, and has better processing consistency.

It should be understood that same dispersion coefficients referred to in this embodiment of this application are not required to be completely the same. A slight deviation between the dispersion coefficients that is caused by a factor, for example, a process error or cable aging, should also fall within the protection scope of this embodiment of this application. Usually, when a cross-sectional diameter of the transmission cable provided in this application is about

$$\frac{1.175c}{f_c \sqrt{\varepsilon_1}}$$

, a dispersion coefficient of a signal whose operating frequency is near $f_c$ is close to 0.

In this embodiment of this application, the transmission cable may use a polymer material with a low loss as a core material of the transmission cable. That is, the periodic structure may be prepared by using a polymer material. For example, the polymer material may be a dielectric material with a low loss in millimeter and terahertz frequency bands, for example, polytetrafluoroethylene (polytetrafluoroethylene, PTFE), polypropylene (Polypropylene, PP), polyethylene (Polyethylene, PE), high-density polyethylene (High-density polyethylene, HDPE), or polystyrene (Polystyrene, PS). In the solution of this application, the transmission cable may be a solid dielectric transmission cable, that is, the transmission cable includes only a solid polymer material. Alternatively, a polymer may be used as a core, and a shielding cladding wraps an outer surface of the solid polymer material, that is, the shielding cladding wraps the periodic structure, to shield external electromagnetic interference and improve signal transmission performance. The shielding cladding may be a dielectric foam shielding cladding or a metal shielding cladding. A material of the dielectric foam shielding cladding needs to be a dielectric material with a relative dielectric constant lower than that of a dielectric core and a low loss tangent, for example, PTFE foam. The metal shielding cladding may use a metal material with an excellent electromagnetic shielding effect and a high conductivity, for example, copper foil, aluminum foil, or tin foil.

Further, when the shielding cladding is a dielectric foam shielding cladding, a relative dielectric constant of the dielectric foam shielding cladding is less than the relative dielectric constant $\varepsilon_1$ of the periodic structure, so that an electric field of the signal is more concentrated in the core, and a radiation loss is reduced. When the shielding cladding is a metal shielding cladding, a metal needs to be a good conductor. A higher conductivity of the metal indicates a smaller signal loss. Usually, a conductivity of the metal shielding cladding is not less than $1 \times 10^7$ seconds/meter (s/m).

For the transmission cable in the solution of this application, the cross-sectional diameter of the positive dispersion transmission section in the periodic structure is small, and the cross-sectional diameter of the negative dispersion transmission section is large. The positive dispersion transmission section and the negative dispersion transmission section cannot be directly connected, and need to be connected through a matching section structure. The matching section may be of a gradient transition-type structure shown in FIG. 3 or a step transition-type structure shown in FIG. 4. The gradient transition-type structure can implement good impedance matching with less reflection, and can reduce the transmission loss of the signal. However, the step transition-type structure has an advantage of simple process. In this application, a quantity of steps of the step transition-type structure is not limited, and lengths of the steps may be the same. In FIG. 4, three steps are used as an example. Fewer steps lead to a simpler process, and when more steps exist, a shape of the structure is closer to be a gradient transition.

In addition, in an implementation process, in addition to using the gradient transition-type matching structure or the step transition-type matching structure, the matching section may alternatively implement a matching connection between a positive dispersion cross section and a negative dispersion cross section by using a form of a parabolic gradient transition, a hyperbolic gradient transition, a Chebyshev curve gradient transition, or the like.

Specifically, both the positive-to-negative dispersion matching section and the negative-to-positive dispersion matching section in the periodic structure are located between the positive dispersion transmission section and the negative dispersion transmission section, to connect the two transmission sections. A difference lies only in a signal transmission direction. The positive-to-negative dispersion matching section is configured to undertake from the positive dispersion transmission section to the negative dispersion transmission section, and the negative-to-positive dispersion matching section is configured to undertake from the negative dispersion transmission section to the positive dispersion transmission section, where a diameter of a joint face between the positive-to-negative dispersion matching section and the positive dispersion transmission section is the same as the cross-sectional diameter of the positive dispersion transmission segment, and a diameter of a joint face between the positive-to-negative dispersion matching section and the negative dispersion transmission section is the same as the cross-sectional diameter of the negative dispersion transmission section. Similarly, cross-sectional diameters at both ends of the negative-to-positive dispersion matching section also meet the foregoing condition.

It should be understood that a structure of the positive-to-negative dispersion matching section and a structure of the negative-to-positive dispersion matching section may be the same. As shown in FIG. 3 or FIG. 4, the two matching sections are equivalent to being rotated 180 degrees from each other. Alternatively, one matching section may use a matching structure, and the other matching section may use another matching structure, for example, the positive-to-negative dispersion matching section uses the gradient transition-type structure, and the negative-to-positive dispersion matching section uses the step transition-type structure. Alternatively, in a plurality of matching sections included in the transmission cable, some matching sections use the gradient transition-type structure, and the other matching sections use the step transition-type structure. Alternatively, in a plurality of matching sections included in the transmission cable, each matching structure is used by some matching sections. The foregoing cases are not limited in this application.

Further, another embodiment of this application further discloses a transmission cable preparation method. A shaping mold with a thick-thin spaced periodic arrangement is prepared first, any one of the polymer materials disclosed in the foregoing embodiment is melted and then is injected into the shaping mold for crystallization, and the shaping mold is removed to obtain a transmission cable with a thick-thin spaced periodic arrangement. With reference to a requirement of an application scenario, wrapping by a dielectric foam shielding cladding or a metal shielding cladding may be further selected, and a wrapping manner may be encircled wrapping or longitudinal wrapping. In addition, a structure of a positive-to-negative dispersion matching section in a periodic structure is also determined by a shape of the shaping mold. It should be understood that, usually, the transmission cable disclosed in this application is a cable, and the cable has a shape characteristic of a thick-thin periodic arrangement. In a special case, the transmission cable may be formed by splicing independent transmission sections and matching sections.

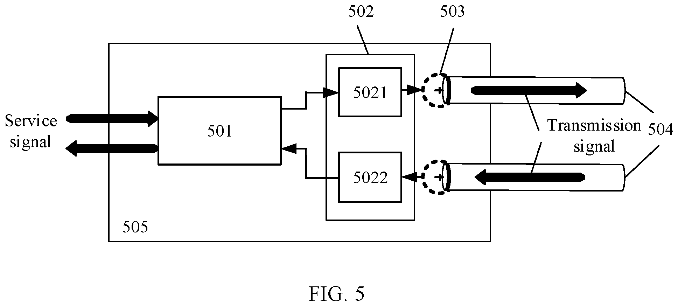

Another embodiment of this application discloses a transmission cable system. The transmission cable system may be used in a short-distance interconnection scenario inside any rack or between the racks of the data center in FIG. 1. A specific structure is shown in FIG. 5, and includes a baseband signal processing chip 501, a radio frequency chip 502, an electromagnetic coupling structure 503, and the transmission cable 504 disclosed in any of the foregoing embodiments, where the baseband signal processing chip 501 is electrically connected to the radio frequency chip 502, the radio frequency chip 502 is further connected to the electromagnetic coupling structure 503, and the electromagnetic coupling structure 503 is connected to the transmission cable 504. The transmission cable system may be integrated with a transceiver function. In this case, the radio frequency chip 502 includes a radio frequency transmit end chip 5021 and a radio frequency receive end chip 5022, and there are two electromagnetic coupling structures and two transmission cables, thereby sending a signal through one electromagnetic coupling structure and one transmission cable and receiving a signal through the other electromagnetic coupling structure and the other transmission cable.

Specifically, when a signal is sent, the baseband processing chip 501 is configured to receive a service signal, and send, after the service signal is processed through modulation and the like, a processed signal to the radio frequency transmit end chip 5021. After up-conversion processing is performed on the signal, a processed signal is coupled to the transmission cable 504 through the electromagnetic coupling structure 503, and is then transmitted through the transmission cable 504. When a signal is received, the transmission cable 504 couples the received signal to the radio frequency receive end chip 5022 through the electromagnetic coupling structure 503, the radio frequency receive end chip 5022 performs down-conversion processing on the received signal and sends a processed signal to the baseband signal processing chip 501, and the baseband signal processing chip 501 demodulates the signal.

Optionally, the transmission cable system further includes a packaging structure 505, configured to package the baseband signal processing chip 501, the radio frequency chip 502, and the electromagnetic coupling structure 503, to implement dust prevention. In addition, the packaging structure 505 may be adapted to a standard interface in a network. The transmission cable system may be inserted on a server or a switch shown in FIG. 1, to implement intra-rack or inter-rack interconnection and intercommunication in the data center network.

In this embodiment, the radio frequency transmit end chip 5021 and the radio frequency receive end chip 5022 may be integrated to form a radio frequency transceiver chip, and each may include a monolithic microwave integrated circuit (Monolithic Microwave Integrated Circuit, MMIC). The baseband signal processing chip may be implemented by using a digital signal processing (Digital signal processing, DSP) chip, a field programmable logic gate array (Field Programmable Gate Array, FPGA), an application-specific integrated circuit (Application-specific integrated circuit, ASIC), an analog circuit, or the like. The electromagnetic coupling structure may implement electromagnetic coupling in a form of a mode converter or an on-chip integrated antenna. It should be understood that the foregoing is merely possible cases provided in this embodiment of this application, and another possible implementation form also falls within the protection scope of this application.

Another embodiment of this application provides a specific transmission cable. A structure of the transmission cable is still shown in FIG. 2. A material of a periodic structure is polytetrafluoroethylene, a relative dielectric constant of the material in a D wave band is 2.1, and a loss tangent is 0.0002. In this embodiment, a cross-sectional diameter of a positive dispersion transmission section is $D_p$=1.6 millimeters (mm), a length of the positive dispersion transmission section is $L_p$=10 mm, a cross-sectional diameter of a negative dispersion transmission section is $D_n$=2 mm, a length of the negative dispersion transmission section is $L_n$=10 mm, a length of a positive-to-negative dispersion matching section is $L_1$=3 mm, and a length of a negative-to-positive dispersion matching section is $L_2$=3 mm, where each matching section is of a gradient transition-type structure, and the D wave band refers to a frequency range of 110 GHz to 170 GHz.

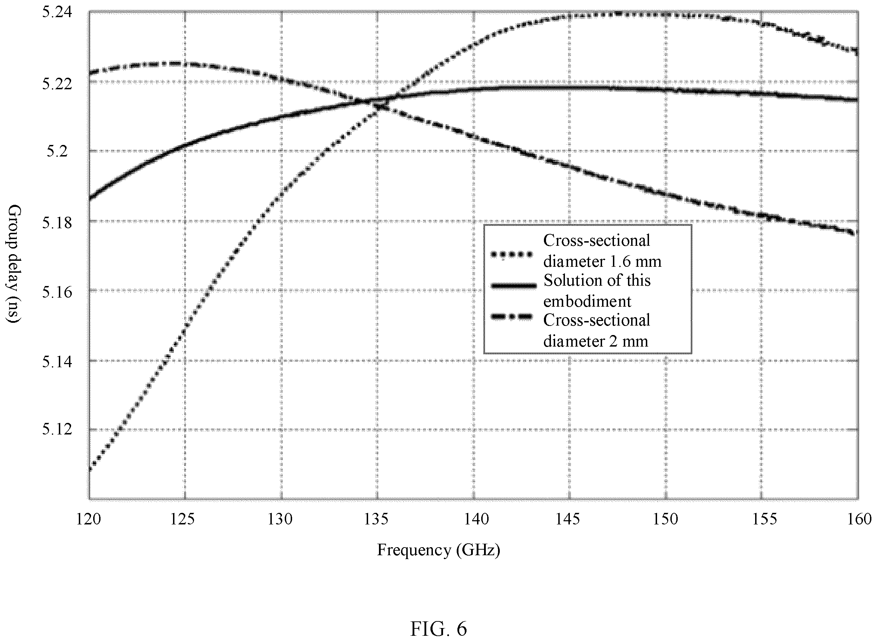

A dispersion characteristic of the transmission cable in this embodiment is simulated by using simulation software. A calculation result is shown in FIG. 6. In a frequency band of 135 GHz to 155 GHz, a total group delay quantity of the transmission cable in 1 meter (m) is 4.23 picoseconds (ps), and a corresponding dispersion coefficient is 0.2115 ps/GHz/m. If the periodic structure disclosed in this application is not used, and when only a solid polymer transmission cable with a cross-sectional diameter of 1.6 mm and a solid polymer transmission cable with a cross-sectional diameter of 2 mm are separately used, corresponding total group delay quantities in 1 m are respectively 30.64 ps and -31.2 ps, and corresponding dispersion coefficients are respectively 1.532 ps/GHz/m and -1.56 ps/GHz/m. It can be learned from the group delay simulation result that the total group delay quantity of the transmission cable in the solution of this application in an operating bandwidth is much lower than that of a single positive or negative dispersion solid polymer transmission cable, and the transmission cable has an obvious cancellation effect between positive dispersion and negative dispersion.

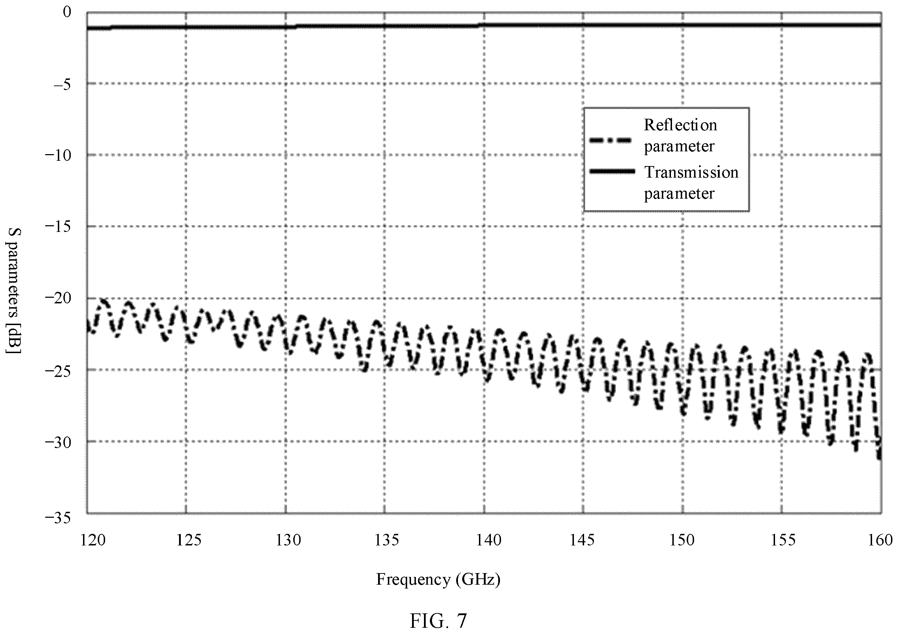

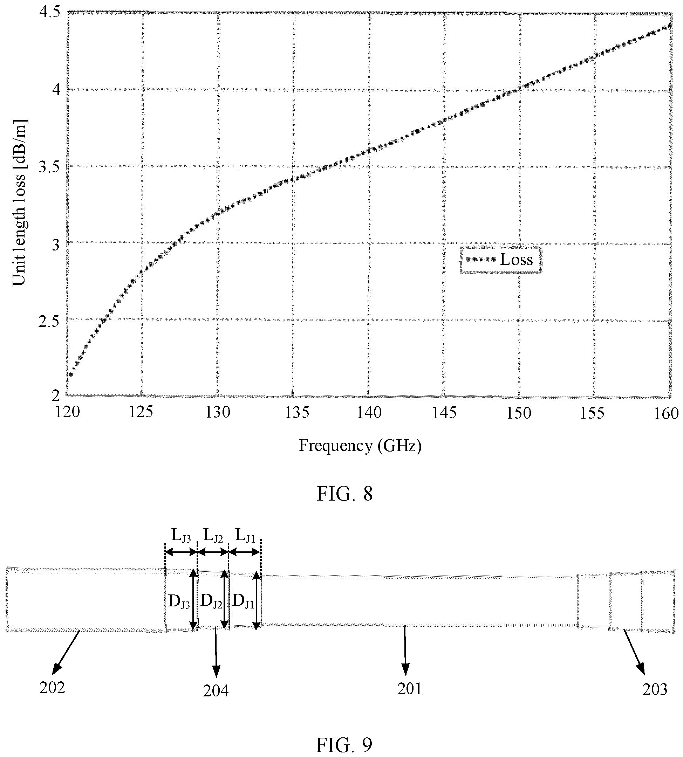

Based on the foregoing structure size, three periodic structures (with a total length of 78 mm) are selected for simulation calculation, to obtain S parameters of the transmission cable in an operating frequency band, namely, a transmission parameter and a reflection parameter. A simulation result is shown in FIG. 7. It can be learned from the simulation result that, in a frequency band of 120 GHz to 160 GHz, the reflection parameter is less than -20 decibel (dB), and the transmission parameter is greater than -1.144 dB. Through conversion, a unit length loss of the transmission cable in this embodiment in the frequency band of 120 GHz to 160 GHz is between 2.11 dB/m and 4.41 dB/m, as shown in FIG. 8. Therefore, the transmission cable has a reduced total group delay quantity and a low loss.

Further, an embodiment of this application further provides another specific transmission cable. A structure is still shown in FIG. 2. A specific material used in a periodic structure, a size of each transmission section, and a length of a matching section are all the same as those in the previous embodiment. A difference lies only in that the matching section uses a step transition-type structure. In this embodiment, a three-step transition-type structure is used. A specific structure is shown in FIG. 9. A cross-sectional diameter of a first step section is $D_{J1}$=1.7 mm, and a length of the first step section is $L_{J1}$=1 mm; a cross-sectional diameter of a second step section is $D_{J2}$=1.8 mm, and a length of the second step section is $L_{J2}$=1 mm; and a cross-sectional diameter of a third step section is $D_{J3}$=1.9 mm, and a length of the third step section is $L_{J3}$=1 mm. In the step transition-type structure, a total length ($L_{J1}$+$L_{J2}$+$L_{J3}$) of the matching section meets a constraint in a specific implementation condition, and is not less than a maximum waveguide wavelength in an operating band, that is, not less than $c/f_c\sqrt{\varepsilon_1}$. In addition, a positive-to-negative dispersion matching section has a same structural parameter as a negative-to-positive dispersion matching section.

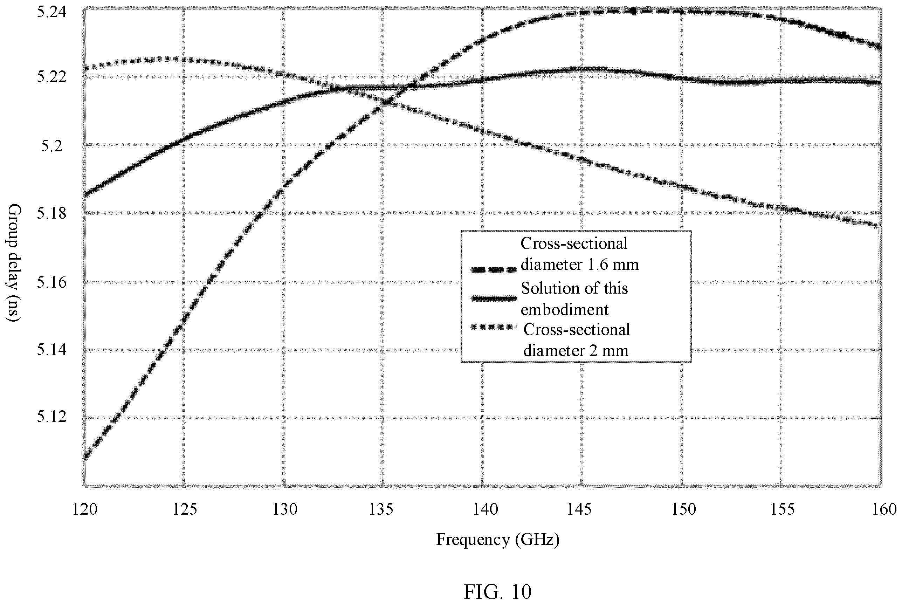

A dispersion characteristic of the transmission cable in this embodiment is simulated by using simulation software. A calculation result is shown in FIG. 10. In a frequency band of 135 GHz to 155 GHz, a total group delay quantity of the transmission cable in 1 m is 5.78 ps, and a corresponding dispersion coefficient is 0.289 ps/GHz/m. If the periodic structure disclosed in this application is not used, and when only a solid polymer transmission cable with a cross-sectional diameter of 1.6 mm and a solid polymer transmission cable with a cross-sectional diameter of 2 mm are separately used, corresponding total group delay quantities in 1 m are respectively 30.64 ps and -31.2 ps, and corresponding dispersion coefficients are respectively 1.532 ps/GHz/m and -1.56 ps/GHz/m. It can be learned from the group delay simulation result that the total group delay quantity of the transmission cable in the solution of this application in an operating bandwidth is much lower than that of a single positive or negative dispersion solid polymer transmission cable. Although the total group delay quantity is slightly increased compared with that of the gradient transition-type matching structure, the transmission cable also has an obvious cancellation effect between positive dispersion and negative dispersion, and has a simple preparation process.

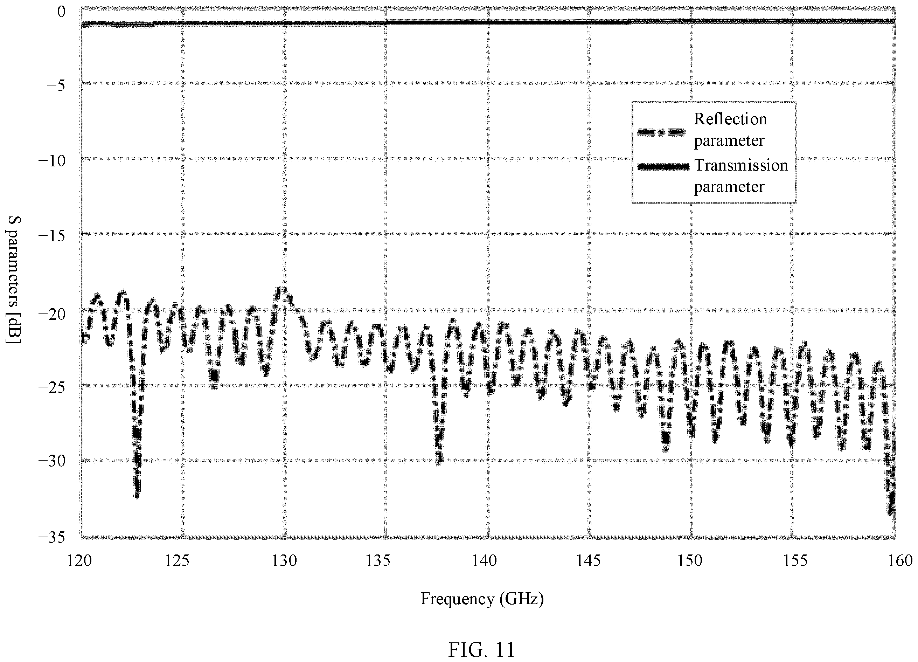

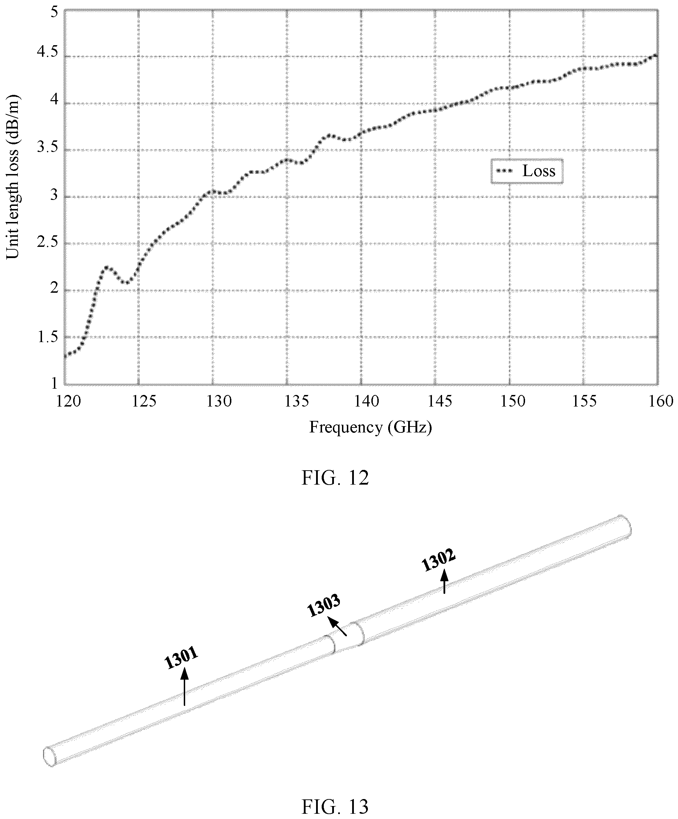

Based on the foregoing structure size, three periodic structures (with a total length of 78 mm) are selected for simulation calculation, to further obtain, in the operating frequency band, S parameters of the transmission cable that meets the size of this embodiment, namely, a transmission parameter and a reflection parameter. A simulation result is shown in FIG. 11. It can be learned from the simulation result that, in a frequency band of 120 GHz to 160 GHz, the reflection parameter is less than -18.5 dB, and the transmission parameter is greater than -1.14 dB. Through conversion, a unit length loss of the transmission cable in this embodiment in the frequency band of 120 GHz to 160 GHz is between 1.3 dB/m and 4.5 dB/m, as shown in FIG. 12. Therefore, the transmission cable has a reduced total group delay quantity and a low loss.

It should be understood that in the foregoing embodiments, a positive dispersion transmission section with a cross-sectional diameter of 1.6 mm and a negative dispersion transmission section with a cross-sectional diameter of 2 mm are selected, and it can be learned that a dispersion cancellation effect is better in the frequency band of 135 GHz to 155 GHz. If a cross-sectional diameter of another size is selected, it can be learned that a dispersion cancellation effect in another frequency band range is better. The size provided in this application is an example, and should not be limited as a unique value.

An embodiment of this application further provides another specific transmission cable. A structure of the transmission cable is shown in FIG. 13, and includes a positive dispersion transmission section 1301, a negative dispersion transmission section 1302, and a dispersion matching section 1303, where a dispersion coefficient of the positive dispersion transmission section 1301 is positive, a dispersion coefficient of the negative dispersion transmission section 1302 is negative, and a cross-sectional diameter of the positive dispersion transmission section 1301 is less than a cross-sectional diameter of the negative dispersion transmission section 1302. In other words, the positive dispersion transmission section 1301 is thinner than the negative dispersion transmission section 1302.

Specifically, a material of the transmission cable is polytetrafluoroethylene, a relative dielectric constant of the material in a D wave band is 2.1, and a loss tangent is 0.0002. In this embodiment, the cross-sectional diameter of the positive dispersion transmission section is $D_p$=1.6 millimeters (mm), a length of the positive dispersion transmission section is $L_p$=30 mm, the cross-sectional diameter of the negative dispersion transmission section is $D_n$=2 mm, a length of the negative dispersion transmission section is $L_n$=30 mm, and a length of the dispersion matching section is $L_1$=3 mm, where the matching section is of a gradient transition-type structure, and the D wave band refers to a frequency range of 110 GHz to 170 GHz.

A dispersion characteristic of the transmission cable in this embodiment is simulated by using simulation software. A calculation result is shown in FIG. 13. In a frequency band of 135 GHz to 155 GHz, a total group delay quantity of the transmission cable in 1 meter (m) is 6.04 ps, and a corresponding dispersion coefficient is 0.302 ps/GHz/m. If the structure disclosed in this application is not used, and when only a solid polymer transmission cable with a cross-sectional diameter of 1.6 mm and a solid polymer transmission cable with a cross-sectional diameter of 2 mm are separately used, corresponding total group delay quantities in 1 m are respectively 30.64 ps and -31.2 ps, and corresponding dispersion coefficients are respectively 1.532 ps/GHz/m and -1.56 ps/GHz/m. It can be learned from the group delay simulation result that the total group delay quantity of the transmission cable in the solution of this application in an operating bandwidth is much lower than that of a single positive or negative dispersion solid polymer transmission cable, and the transmission cable has an obvious cancellation effect between positive dispersion and negative dispersion.

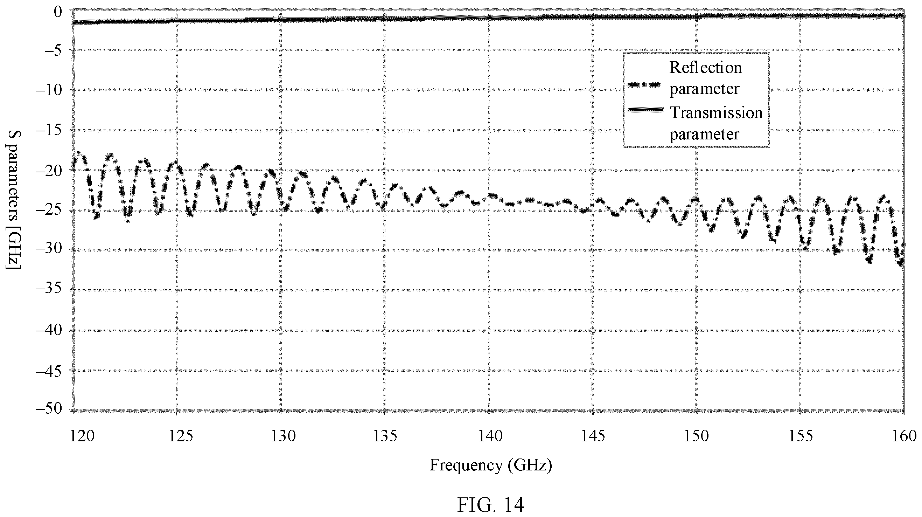

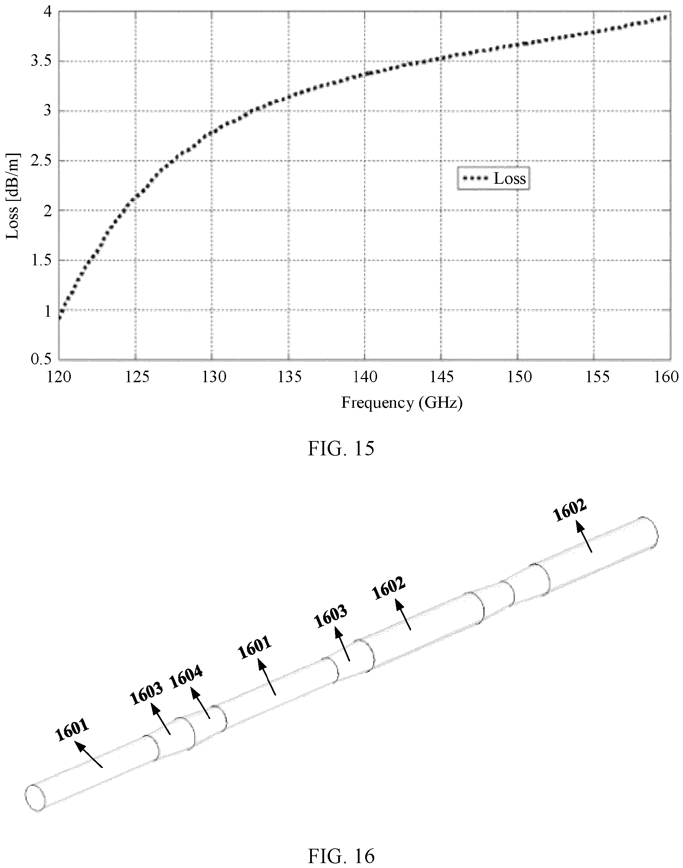

Based on the foregoing structure size, simulation calculation is performed when a length of the transmission cable is 63 mm, to obtain S parameters of the transmission cable in an operating frequency band, namely, a transmission parameter and a reflection parameter. A simulation result is shown in FIG. 14. It can be learned from the simulation result that, in a frequency band of 120 GHz to 160 GHz, the reflection parameter is less than -17.9 dB, and the transmission parameter is greater than -1.56 dB. Through conversion, a unit length loss of the transmission cable in this embodiment in the frequency band of 120 GHz to 160 GHz is between 0.85 dB/m and 3.9 dB/m, as shown in FIG. 15. Therefore, the transmission cable has a reduced total group delay quantity and a low loss.

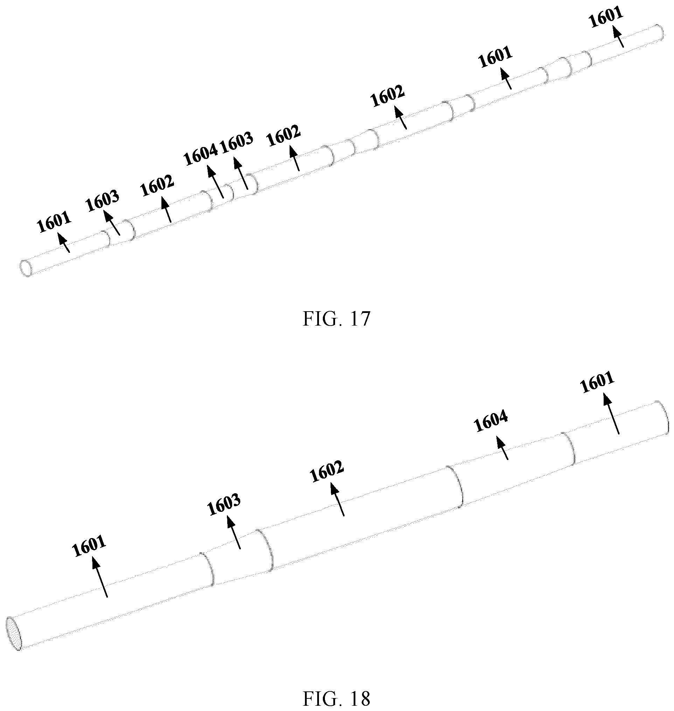

In addition, this application further provides a plurality of transmission cables with different structures. Each transmission cable includes at least one transmission structure. The transmission structure includes four parts: a positive dispersion transmission section 1601, a negative dispersion transmission section 1602, a positive-to-negative dispersion matching section 1603, and a negative-to-positive dispersion matching section 1603. There are a plurality of different specific structures. For example, in the periodic structure in FIG. 2, the transmission sections are arranged in an order of positive and negative. Alternatively, as shown in FIG. 16, transmission sections are arranged in an order of positive, positive, negative, and negative. Alternatively, as shown in FIG. 17, transmission sections are arranged in an order of positive, negative, negative, negative, positive, and positive. Alternatively, as shown in FIG. 18, transmission sections in a transmission structure are arranged in an order of positive, negative, and positive. Further, same dispersion transmission structures are connected through two sections of axially symmetrical impedance matching structures, and different dispersion transmission sections may be connected through a positive-to-negative dispersion matching section or a negative-to-positive dispersion matching section. A length of the positive-to-negative dispersion matching section and a length of the negative-to-positive dispersion matching section may be the same or may be different. For example, in FIG. 18, the lengths of the two matching sections are different. Further, the transmission cable may alternatively have no matching section, and the positive dispersion transmission section is directly connected to the negative dispersion transmission section, to implement a cancellation effect between positive dispersion and negative dispersion.

It should be understood that the transmission cable disclosed in this application may include only one transmission structure, or may include a plurality of transmission structures. If a plurality of transmission structures are included, the transmission cable may include a plurality of same transmission structures. For example, a repeated arrangement of the transmission cable is shown in the transmission structure in FIG. 2, FIG. 16, FIG. 17, or FIG. 18. Alternatively, the transmission cable may include different transmission structures. For example, the transmission cable includes at least two different transmission structures in FIG. 2 and FIG. 16 to FIG. 18. Herein, to ensure dispersion matching, a dispersion coefficient of the entire transmission cable is less than an absolute value of a dispersion coefficient of a single positive or negative dispersion transmission cable. Because a total group delay quantity is equal to a product of a dispersion coefficient and a length, a total group delay quantity of the positive dispersion transmission section is equal to a product of a dispersion coefficient $C_p$ and a length $L_p$ of the positive dispersion transmission section, a total group delay quantity of the negative dispersion transmission section is equal to a product of a dispersion coefficient $C_n$ and a length $L_n$ of the negative dispersion transmission section, and a total group delay quantity of the dispersion matching section is equal to a product of a dispersion coefficient $C_m$ and a length $L_m$ of the positive-to-negative dispersion matching section. A group delay meets the following relationship:

$$\left| \frac{C_n \times L_n + C_p \times L_p + C_m \times L_m}{L_n + L_p + L_m} \right| < min(|C_n|, |C_p|).$$

If the matching section includes a positive-to-negative dispersion matching section and a negative-to-positive dispersion matching section, a total group delay quantity of the positive-to-negative dispersion matching section is equal to a product of a dispersion coefficient $C_1$ and a length $L_1$ of the positive-to-negative dispersion matching section, and a total group delay quantity of the negative-to-positive dispersion matching section is equal to a product of a dispersion coefficient $C_2$ and a length $L_2$ of the negative-to-positive dispersion matching section. A total group delay quantity of the transmission cable can meet the following relationship:

$$\left| \frac{C_n \times L_n + C_p \times L_p + C_1 \times L_1 + C_2 \times L_2}{L_n + L_p + L_1 + L_2} \right| < min(|C_n|, |C_P|).$$

A total dispersion amount of the transmission cable is lower than that of a positive dispersion transmission section of a same length, and lower than that of a negative dispersion transmission section of the same length, so that the cancellation effect between positive dispersion and negative dispersion can be implemented.

In addition, requirements such as lengths, cross-sectional diameters, and materials for the positive dispersion transmission section, the negative dispersion transmission section, and the matching section and a specific structure of the matching section are already described in the foregoing embodiments. Details are not described in this embodiment again.

Although this application is described with reference to specific features and embodiments thereof, various modifications and combinations may be made to them without departing from the spirit and scope of this application. Correspondingly, the specification and accompanying drawings are merely example description of this application defined by the appended claims, and is considered as any of or all modifications, variations, combinations or equivalents that cover the scope of this application.

It is clear that a person skilled in the art can make various modifications and variations to this application without departing from the spirit and scope of the present invention. In this way, this application is intended to cover these modifications and variations of embodiments of this application provided that they fall within the scope of protection defined by the following claims and their equivalent technologies.

## Claims

1. A transmission cable, comprising a positive dispersion transmission section, a negative dispersion transmission section, and a dispersion matching section, wherein
a dispersion coefficient of the positive dispersion transmission section is positive, a dispersion coefficient of the negative dispersion transmission section is negative, a cross-sectional diameter of the positive dispersion transmission section is less than a cross-sectional diameter of the negative dispersion transmission section, and the dispersion matching section is configured to connect the positive dispersion transmission section and the negative dispersion transmission section.

2. The transmission cable according to claim 1, wherein the cross-sectional diameter Dp of the positive dispersion transmission section and the cross-sectional diameter $D_n$ of the negative dispersion transmission section meet the following relationship:

$$D_n > \frac{1.175c}{f_c\sqrt{\varepsilon_1}} > D_p,$$

wherein
$\varepsilon_1$ is a relative dielectric constant of a periodic structure, c is a speed of light in a vacuum, and $f_c$ is a lowest operating frequency in an operating band.

3. The transmission cable according to claim 1 or 2, wherein the dispersion coefficient $C_p$ of the positive dispersion transmission section and the dispersion coefficient $C_n$ of the negative dispersion transmission section have a same value and opposite symbols.

4. The transmission cable according to any one of claims 1 to 3, wherein the dispersion matching section comprises a positive-to-negative dispersion matching section and a negative-to-positive dispersion matching section, the positive-to-negative dispersion matching section is configured to connect the positive dispersion transmission section and the negative dispersion transmission section, and the other end of the negative dispersion transmission section is connected to the negative-to-positive dispersion matching section or the other end of the positive dispersion transmission section is connected to the negative-to-positive dispersion matching section.

5. The transmission cable according to any one of claim 4, wherein the transmission cable comprises a plurality of periodic structures, and each periodic structure comprises a positive dispersion transmission section, a negative dispersion transmission section, a positive-to-negative dispersion matching section, and a negative-to-positive dispersion matching section.

6. The transmission cable according to any one of claims 1 to 5, wherein all of a length of the positive dispersion transmission section, a length of the negative dispersion transmission section, and a length of the dispersion matching section are not less than $\dfrac{c}{f_c \sqrt{\varepsilon_1}}$, $\varepsilon_1$ is a relative dielectric constant of the transmission cable, c is the speed of light in a vacuum, and $f_c$ is the lowest operating frequency in an operating band.

7. The transmission cable according to claim 6, wherein the length of each of the positive dispersion transmission section, the negative dispersion transmission section, and the dispersion matching section is an integer multiple of

$$\dfrac{c}{f_c \sqrt{\varepsilon_1}}.$$

8. The transmission cable according to any one of claims 1 to 7, wherein the transmission cable further comprises a shielding cladding, and the shielding cladding wraps the positive dispersion transmission section, the negative dispersion transmission section, and the dispersion matching section to shield external electromagnetic interference.

9. The transmission cable according to claim 8, wherein the shielding cladding is a dielectric foam shielding cladding, and a relative dielectric constant of the dielectric foam shielding cladding is less than the relative dielectric constant $\varepsilon 1$ of the transmission cable.

10. The transmission cable according to claim 8, wherein the shielding cladding is a metal shielding cladding, and a conductivity of the metal shielding cladding is not less than $1 \times 107$ seconds/meter (s/m).

11. The transmission cable according to claim 4 or 5, wherein the dispersion coefficient $C_p$ and a length $L_p$ of the positive dispersion transmission section, the dispersion coefficient $C_n$ and a length $L_n$ of the negative dispersion transmission section, a dispersion coefficient $C_1$ and a length $L_1$ of the positive-to-negative dispersion matching section, and a dispersion coefficient $C_2$ and a length $L_2$ of the negative-to-positive dispersion matching section meet the following relationship:

$$\left| \dfrac{C_n \times L_n + C_p \times L_p + C_1 \times L_1 + C_2 \times L_2}{L_n + L_p + L_1 + L_2} \right| < min(|C_n|, |C_P|).$$

12. The transmission cable according to any one of claims 1 to 11, wherein the dispersion coefficient $C_p$ and the length $L_p$ of the positive dispersion transmission section and the dispersion coefficient $C_n$ and the length $L_n$ of the negative dispersion transmission section meet the following relationships:
$L_p = L_n$ and $C_p + C_n = 0$.

13. The transmission cable according to any one of claims 1 to 12, wherein a diameter of a joint face between the dispersion matching section and the positive dispersion transmission section is the same as the cross-sectional diameter of the positive dispersion transmission section, a diameter of a joint face between the dispersion matching section and the negative dispersion transmission section is the same as the cross-sectional diameter of the negative dispersion transmission section, and a cross-sectional diameter of the dispersion matching section has a gradient transition or a step transition.

14. The transmission cable according to any one of claims 1 to 13, wherein the positive dispersion transmission section, the negative dispersion transmission section, and the dispersion matching section are made of a same material, and the material comprises any one of polytetrafluorethylene, polypropylene, polyethylene, high-density polyethylene (HDPE), or polystyrene.

15. A transmission cable system, comprising a radio frequency chip, a baseband signal processing chip, an electromagnetic coupling structure, and the transmission cable according to any one of claims 1 to 14, wherein the baseband signal processing chip is electrically connected to the radio frequency chip, the radio frequency chip is further connected to the electromagnetic coupling structure, and the electromagnetic coupling structure is connected to the transmission cable.

16. The transmission cable system according to claim 15, wherein the transmission cable system further comprises a packaging structure, configured to package the radio frequency chip, the baseband signal processing chip, and the electromagnetic coupling structure.

FIG. 1

FIG. 2

FIG. 3

FIG. 4

FIG. 5

FIG. 6

FIG. 7

FIG. 8

FIG. 9

FIG. 10

FIG. 11

EP 4 060 390 A1

FIG. 12

FIG. 13

FIG. 14

EP 4 060 390 A1

FIG. 15

FIG. 16

FIG. 17

FIG. 18

## INTERNATIONAL SEARCH REPORT

| International application No. |
| --- |
| **PCT/CN2020/140109** |

| **A.** | **CLASSIFICATION OF SUBJECT MATTER** |
| --- | --- |

G02B 6/293(2006.01)i

According to International Patent Classification (IPC) or to both national classification and IPC

| **B.** | **FIELDS SEARCHED** |
| --- | --- |

Minimum documentation searched (classification system followed by classification symbols)

G02B6/-

Documentation searched other than minimum documentation to the extent that such documents are included in the fields searched

Electronic data base consulted during the international search (name of data base and, where practicable, search terms used)

CNPAT, CNKI, WPI, EPODOC: 华为, 李昆, 张鲁奇, 吕瑞, 刘余, 太赫兹, 毫米波, TAC, 线缆, 聚合物, 群延迟, 正色散, 负色散, 周期, 射频, 芯片, 横截面, terahertz, cable, delay, dispers+, positiv+, negativ+, period, chip+

| **C.** | **DOCUMENTS CONSIDERED TO BE RELEVANT** | | |
| --- | --- | --- | --- |
| Category* | Citation of document, with indication, where appropriate, of the relevant passages | | Relevant to claim No. |
| A | CN 103731211 A (BEIJING UNIVERSITY OF POSTS AND TELECOMMUNICATIONS) 16 April 2014 (2014-04-16)<br>description, paragraphs [0005]-[0016] and figures 1-2 | | 1-16 |
| A | CN 1185589 A (LUCENT TECHNOLOGIES INC.) 24 June 1998 (1998-06-24)<br>entire document | | 1-16 |
| A | CN 106463810 A (SPINNER GMBH ELEKTROTECH) 22 February 2017 (2017-02-22)<br>entire document | | 1-16 |
| A | CN 103247581 A (INTERNATIONAL BUSINESS MACHINES CORPORATION) 14 August 2013 (2013-08-14)<br>entire document | | 1-16 |
| A | CN 105737984 A (SHENZHEN TERAHERTZ SYSTEM EQUIPMENT CO., LTD.) 06 July 2016 (2016-07-06)<br>entire document | | 1-16 |
| A | US 2016274306 A1 (CANON KABUSHIKI KAISHA) 22 September 2016 (2016-09-22)<br>entire document | | 1-16 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 March 2021** | **29 March 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/140109**

| Patent document cited in search report | | | Publication date (day/month/year) | Patent family member(s) | | | Publication date (day/month/year) |
|---|---|---|---|---|---|---|---|
| CN | 103731211 | A | 16 April 2014 | None | | | |
| CN | 1185589 | A | 24 June 1998 | BR | 9703427 | A | 15 September 1998 |
| | | | | CN | 1149413 | C | 12 May 2004 |
| | | | | AU | 2467097 | A | 11 December 1997 |
| | | | | EP | 0812076 | B1 | 05 November 2003 |
| | | | | CA | 2202591 | C | 31 July 2001 |
| | | | | BR | 9703427 | B1 | 29 June 2010 |
| | | | | KR | 100281941 | B1 | 15 February 2001 |
| | | | | KR | 980003647 | A | 30 March 1998 |
| | | | | EP | 0812076 | A1 | 10 December 1997 |
| | | | | CA | 2202591 | A1 | 07 December 1997 |
| | | | | AU | 712923 | B2 | 18 November 1999 |
| | | | | JP | H1062639 | A | 06 March 1998 |
| | | | | DE | 69725930 | D1 | 11 December 2003 |
| | | | | JP | 3190598 | B2 | 23 July 2001 |
| | | | | US | 5611016 | A | 11 March 1997 |
| CN | 106463810 | A | 22 February 2017 | JP | 2017518700 | A | 06 July 2017 |
| | | | | EP | 2958187 | A1 | 23 December 2015 |
| | | | | US | 2017077581 | A1 | 16 March 2017 |
| | | | | WO | 2015180850 | A1 | 03 December 2015 |
| | | | | EP | 2958187 | B1 | 21 December 2016 |
| | | | | JP | 6147447 | B1 | 14 June 2017 |
| | | | | CN | 106463810 | B | 08 May 2018 |
| | | | | KR | 101819098 | B1 | 16 January 2018 |
| | | | | US | 10079418 | B2 | 18 September 2018 |
| | | | | KR | 20170012394 | A | 02 February 2017 |
| CN | 103247581 | A | 14 August 2013 | US | 8648454 | B2 | 11 February 2014 |
| | | | | US | 2013207274 | A1 | 15 August 2013 |
| | | | | CN | 103247581 | B | 14 October 2015 |
| CN | 105737984 | A | 06 July 2016 | WO | 2017185555 | A1 | 02 November 2017 |
| US | 2016274306 | A1 | 22 September 2016 | JP | 2016173561 | A | 29 September 2016 |

Form PCT/ISA/210 (patent family annex) (January 2015)

**REFERENCES CITED IN THE DESCRIPTION**

**Patent documents cited in the description**

- CN 201911385172
- CN 202010450190